# EUROPÄISCHE PATENTANMELDUNG

(11) **EP 2 277 730 A1**
(43) Veröffentlichungstag der Anmeldung: **26.01.2011**
(21) Anmeldenummer: 10168690.5
(22) Anmeldetag: 07.07.2010
(51) Int. Cl.: B60J 7/22

(54) **Antriebseinheit für eine Windstopeinrichtung**

(30) Priorität: 21.07.2009 DE 102009035335
(71) Anmelder: SCAMBIA Industrial Developments Aktiengesellschaft, 9494 Schaan (LI)
(72) Erfinder: Rimmelspacher, Bernhard, 76287, Rheinstetten (DE); Riehle, Jörg, 71679, Asperg (DE)
(74) Vertreter: Hoeger, Stellrecht & Partner Patentanwälte

(57) **Zusammenfassung**

Um eine Antriebseinheit für eine Windstopeinrichtung (16) für Cabriofahrzeuge (10), umfassend ein an einer Karosserie (12) montierbares Basisteil (22) und ein relativ zum Basisteil zwischen einer aktiven aufrechten Stellung und einer inaktiven nach hinten geklappten Stellung schwenkbares Windschott (24), wobei die Antriebseinheit (50) zum Verschwenken des Windschotts (24) zwischen der aktiven Stellung und der inaktiven Stellung dient, derart zu verbessern, dass diese ohne Änderung des konstruktiven Aufbaus der Windstopeinrichtung (16) an dieser anbaubar ist, wird vorgeschlagen, dass die Antriebseinheit (50) eine Verschiebeeinrichtung (90) und ein in seiner Erstreckungsrichtung zugsteifes und quer zur Erstreckungsrichtung bewegbares Verschiebeelement (52) umfasst, welches zum Verschwenken des Windschotts zwischen der aktiven Stellung und der inaktiven Stellung die Verschiebeeinrichtung (90) mit dem Windschott (24) koppelt und dazu zumindest in einer Stellung des Windschotts einen gekrümmt verlaufenden Abschnitt (58) aufweist.

## Beschreibung

Die Erfindung betrifft eine Antriebseinheit für eine Windstopeinrichtung für Cabriofahrzeuge, umfassend ein an einer Karosserie montierbares Basisteil und ein relativ zum Basisteil zwischen einer aktiven aufrechten Stellung und einer inaktiven, nach hinten geklappten Stellung verschwenkbares Windschott, wobei die Antriebseinheit zum Verschwenken des Windschotts zwischen der aktiven und der inaktiven Stellung dient.

Derartige Antriebseinheiten sind aus dem Stand der Technik bekannt, diese sind beispielsweise gemäß der EP 1 621 386 A in die Windstopeinrichtung, beispielsweise in das Basisteil integriert.

Eine derartige Antriebseinheit hat den Nachteil, dass diese nicht nachträglich anbaubar ist und auch den weiteren Nachteil, dass diese eine Änderung der Konstruktion der Windstopeinrichtung erforderlich macht.

Der Erfindung liegt daher die Aufgabe zugrunde, eine Antriebseinheit der gattungsgemäßen Art derart zu verbessern, dass diese ohne Änderung des konstruktiven Aufbaus der Windstopeinrichtung an dieser anbaubar ist.

Diese Aufgabe wird bei einer Antriebseinheit der eingangs beschriebenen Art erfindungsgemäß dadurch gelöst, dass die Antriebseinheit eine Verschiebeeinrichtung und ein in seiner Erstreckungsrichtung zugsteifes und quer zur Erstreckungsrichtung bewegbares Verschiebeelement umfasst, welches zum Verschwenken des Windschotts zwischen der aktiven und der inaktiven Stellung die Verschiebeeinrichtung mit dem Windschott koppelt und dazu zumindest in einer Stellung des Windschotts einen gekrümmt verlaufenden Abschnitt aufweist.

Der Vorteil der erfindungsgemäßen Lösung ist darin zu sehen, dass mit dieser die Möglichkeit besteht, die Antriebseinheit in einfacher Weise zu montieren, da das Verschiebeelement quer zu seiner Erstreckungsrichtung gerade gerichtet oder gekrümmt verlaufen kann und damit an dem Windschott in einer Art und Weise angreifen kann, die eine Änderung des Verlaufs des Verschiebeelements beim Übergang von einer Stellung zu anderen erforderlich macht.

Damit lässt sich die erfindungsgemäße Antriebseinheit mit dem Verschiebeelement so montieren, dass dieses sich an die Bewegung des Windschotts beim Verschwenken von der einen Stellung in die andere Stellung anpassen kann.

Das Verschiebeelement kann grundsätzlich als quer zu seiner Erstreckungsrichtung biegeschlaff bewegbares Element ausgebildet sein.

Mit einem derartigen Verschiebeelement lassen sich allerdings nur Zugkräfte übertragen.

Aus diesem Grund ist es besonders vorteilhaft, wenn das Verschiebeelement als quer zu seiner Erstreckungsrichtung federelastisch bewegbares Element ausgebildet ist, so wobei das Verschiebeelement eine begrenzte Eigensteifigkeit aufweist, die federelastisch überwunden werden kann, so dass mit dem Verschiebelement auch zumindest in begrenztem Maße Schubkräfte übertragbar sind.

Grundsätzlich könnte das Verschiebeelement aus den unterschiedlichsten Materialien ausgebildet sein.

Eine besonders vorteilhafte Lösung sieht dabei vor, dass das Verschiebeelement als Metallstrang, beispielsweise als Federstahlband, ausgebildet ist, da in diesem Fall eine große Zugsteifigkeit mit einer ausreichend großen Eigensteifigkeit und Federelastizität quer zur Erstreckungsrichtung verknüpft ist, die für die Übertragung von Zug- und Schubkräften erforderlich ist.

Beispielsweise könnte die Antriebseinheit so ausgebildet sein, dass das Verschiebeelement nicht unmittelbar am Windschott angreift, sondern beispielsweise an einem an dem Windschott montierbaren Zwischenelement, welches in der Art eines Hebels auf das Windschott wirken könnte.

Aus Gründen eines möglichst optimalen optischen Erscheinungsbildes hat es sich jedoch als vorteilhaft erwiesen, wenn das Verschiebeelement direkt mit dem Windschott verbindbar ist.

Besonders günstig ist es in diesem Fall, wenn das Verschiebeelement mit einer unteren Rahmenstrebe eines Windschottrahmens des Windschotts verbindbar ist.

Hinsichtlich des Verlaufs des Verschiebeelements von der Verschiebeeinrichtung zum Windschott wurden bislang keine näheren Angaben gemacht.

Prinzipiell könnte es dabei vorgesehen sein, dass das Verschiebeelement zwischen der Verschiebeeinrichtung und dem Windschottrahmen freiliegend verläuft.

Um jedoch die von dem Verschiebeelement auf das Windschottelement wirkenden Kräfte durch einen geeigneten Verlauf des Verschiebeelements zumindest in einem gewissen Bereich vorgeben zu können, ist vorzugsweise vorgesehen, dass der gekrümmt verlaufende Abschnitt des Verschiebeelements mittels einer Führung geführt ist.

Eine derartige, den gekrümmten Abschnitt des Verschiebeelements aufnehmende Führung erlaubt einerseits den gekrümmten Abschnitt des Verschiebeelements so auszubilden, dass dieser bei auf das Windschott aufzubringenden Zugkräften in geeigneter Weise ziehend auf das Windschott einwirkt und/oder alternativ dazu, dass sich mit dem Verschiebeelement auch über den gekrümmten Abschnitt hinweg Schubkräfte auf das Windschott aufbringen lassen.

Die Führung des gekrümmt verlaufenden Abschnitt des Verschiebeelements erfolgt in einfacher Weise durch die Führung dadurch, dass diese einen gekrümmt verlaufenden Führungskanal aufweist.

Der Führungskanal könnte dabei beispielsweise so ausgebildet sein, dass dieser das Verschiebeelement exakt führt und somit den gekrümmten Verlauf exakt vorgibt.

Um jedoch die Vorteile eines quer zu seiner Erstreckungsrichtung bewegbaren, insbesondere federelastisch bewegbaren Verschiebeelements ausnützen zu können, ist vorzugsweise vorgesehen, dass der Führungskanal variierende Krümmungen des in diesem geführten Abschnitts des Verschiebeelements zulässt.

Das heißt, dass der Führungskanal die Bewegungen des Verschiebeelements quer zu seiner Erstreckungsrichtung zulässt, die notwendig sind, um den Bewegungen des Windschotts beim Verschwenken von der einen Stellung in die andere Stellung zu folgen.

Insbesondere ist es hierbei günstig, wenn der Führungskanal einen eine Bewegung des Verschiebeelements quer zu seiner Erstreckungsrichtung zulassenden trichterförmigen Bereich aufweist.

Ein derartiger trichterförmiger Bereich des Führungskanals liegt vorzugsweise nahe einer Öffnung der Führung, aus welcher das zu dem Windschott geführte Verschiebeelement austritt.

Ferner ist es für die Führung des Verschiebeelements von Vorteil, wenn der Führungskanal auf mindestens einer Seite eine gekrümmte Führungsfläche aufweist, da eine derartige gekrümmte Führungsfläche in einfacher Weise die Möglichkeit eröffnet, das Verschiebeelement in Form eines gekrümmt verlaufenden Abschnitts zu führen.

Insbesondere ist es dabei günstig, wenn das Verschiebeelement bei in der einen Stellung stehendem Windschott über eine größere Strecke an der gekrümmten Führungsfläche anliegt als in der anderen Stellung des Windschotts, das heißt, wenn das Verschiebeelement sich wahlweise über unterschiedliche Strecken an die gekrümmte Führungsfläche anlegen lässt, so dass das Führungselement damit in einfacher Weise den kinematischen Bewegungen des Windschotts beim Verschwenken von der einen Stellung in die andere Stellung folgen kann.

Eine besonders günstige Lösung sieht vor, dass der Führungskanal eine gekrümmte äußere und eine gekrümmte innere Führungsfläche aufweist, zwischen denen das Verschiebeelement liegt.

Dabei sind die gekrümmte innere und die gekrümmte äußere Führungsfläche vorzugsweise so ausgebildet, dass diese unterschiedliche Verläufe aufweisen, so dass sich zwischen diesen gekrümmten inneren und äußeren Führungsflächen ein Freiraum bildet, der dazu führt, dass sich das Verschiebeelement wahlweise an der einen gekrümmten Führungsfläche oder der anderen gekrümmten Führungsfläche anlegen kann.

Vorzugsweise liegt dabei zwischen den beiden gekrümmten Führungsflächen der trichterähnliche Bereich des Führungskanals.

Eine derartige Ausbildung des Führungskanals erlaubt es, das Verschiebeelement einerseits so zu führen, dass es optimal Zugkräfte übertragen kann und hierbei an einer der Führungsflächen anliegt und auch optimal, zumindest im Rahmen seiner Eigensteifigkeit, Schubkräfte übertragen kann, wobei in diesem Fall das Führungselement vorzugsweise an der gegenüberliegenden anderen Führungsfläche anliegt.

Unter einer "inneren Führungsfläche" ist dabei die Führungsfläche zu verstehen, die in dem gekrümmten Abschnitt des Verschiebeelements auf einer Innenseite des Bogens liegt, während unter einer äußeren Führungsfläche die Führungsfläche zu verstehen ist, die in dem gekrümmten Abschnitt auf einer äußeren Seite des Bogens liegt.

Um insbesondere das Verschiebeelement ausgehend von der Verschiebeeinrichtung exakt aufnehmen zu können, ist vorzugsweise vorgesehen, dass die Führung einen Führungskanal mit einem das Verschiebeelement querbewegungsfrei führenden Bereich aufweist.

Hinsichtlich der Ausbildung der Verschiebeeinrichtung selbst wurden bislang keinerlei näheren Angaben gemacht.

Beispielsweise könnte die Verschiebeeinrichtung als linear antreibbare Verschiebeeinrichtung ausgebildet sein, wobei dies einen motorischen Antrieb erschweren würde.

Aus diesem Grund ist vorzugsweise vorgesehen, dass die Verschiebeeinrichtung eine drehend antreibbare Verschiebeeinheit umfasst, welche somit mit einer drehenden Antriebsbewegung in der Lage ist, das Verschiebeelement zu verschieben.

Eine vorteilhafte Lösung sieht dabei vor, dass die drehend antreibbare Verschiebeeinheit linear auf das Verschiebeelement einwirkt.

Eine derartige lineare Einwirkung auf das Verschiebeelement lässt sich besonders günstig dann realisieren, wenn die Verschiebeeinheit eine Gewindespindel und eine Spindelmutter umfasst.

Beispielsweise könnte dabei die Gewindespindel manuell antreibbar sein.

Besonders günstig ist es jedoch, wenn die Gewindespindel durch einen Antriebsmotor antreibbar ist.

In diesem Fall ist dann die Spindelmutter drehfest, jedoch linear verschiebbar angeordnet.

Es ist aber auch die kinematische Umkehrung denkbar, nämlich dass die Spindelmutter drehend antreibbar ist und die Gewindespindel drehfest jedoch linear verschiebbar angeordnet ist.

Hinsichtlich der Montage der erfindungsgemäßen Antriebseinheit wurden im Zusammenhang mit der bisherigen Beschreibung der einzelnen Ausführungsformen keine näheren Angaben gemacht.

So könnte es grundsätzlich denkbar sein, die Antriebseinheit an der Karosserie des Fahrzeugs anzuordnen oder zu montieren.

Eine besonders vorteilhafte Lösung sieht jedoch vor, dass die Antriebseinheit an dem Basisteil montierbar ist.

Besonders zweckmäßig ist es dabei, wenn die Antriebseinheit ein Gehäuse aufweist, welches an dem Basisteil montierbar ist, wobei die Montage des Gehäuses vorzugsweise so erfolgt, dass das Gehäuse an das Baisteil angepasst ist und keine geometrischen Formänderungen des Basisteils erfordert. Hierbei ist es besonders vorteilhaft, wenn das Gehäuse an einem Vorderteil des Basisteils montierbar ist.

Da die Position der Führung relativ zu der Windstopeinrichtung und dem Basisteil von Bedeutung ist, ist vorzugsweise vorgesehen, dass das Gehäuse mit einem die Führung aufnehmenden Teil an dem Basisteil montierbar ist, so dass der die Führung aufnehmende Teil des Gehäuses fest an dem Basisteil fixiert ist und somit auch in der Lage ist, die primär auf diesen wirkenden Kräfte auf das Basisteil zu übertragen.

Eine besonders günstige Lösung sieht dabei vor, dass das Gehäuse eine vordere Strebe des Basisteils teilweise umgreift und damit mit diesem die Strebe teilweise umgreifenden Bereich an diesem fixierbar ist.

Hinsichtlich der Anordnung der Führung in dem Gehäuse relativ zum Basisteil ist es besonders günstig, wenn die Führung das Verschiebeelement teilweise um die vordere Strebe des Basisteils herum führt, so dass damit in einfacher Weise das Verschiebeelement von der Verschiebeeinrichtung zu dem Windschott geführt werden kann, insbesondere in einer optisch unauffälligen Art und Weise.

Hinsichtlich der Art und Weise der Montage der Antriebseinheit an dem Basisteil wurden bislang ebenfalls keine näheren Angaben gemacht.

So sieht eine vorteilhafte Lösung vor, dass die Antriebseinheit an einer Unterseite des Basisteils montierbar ist.

Diese Lösung hat den Vorteil, dass damit die Antriebseinheit optisch für einen Betrachter der Windstopeinrichtung unauffällig ist, da die Antriebseinheit an der Unterseite des Basisteils, das heißt an der der Karosserie zugewandten Seite des Basisteils, angeordnet ist und somit optisch nicht auffällt. Besonders günstig ist es, wenn das Gehäuse an einer vorderen Strebe des Basisteils von unten montierbar ist.

Darüber hinaus betrifft die Erfindung auch eine Windstopeinrichtung für Cabriofahrzeuge, umfassend ein an einer Karosserie montierbares Basisteil, ein relativ zum Basisteil zwischen einer aktiven aufrechten Stellung und einer inaktiven nach hinten geklappten Stellung verschwenkbares Windschott sowie eine Antriebseinheit zum Verschwenken des Windschotts zwischen der aktiven Stellung und der inaktiven Stellung, wobei erfindungsgemäß die Antriebseinheit nach einem oder mehreren der voranstehenden Merkmale ausgebildet ist.

Eine derartige Windstopeinrichtung hat die vorstehend im Zusammenhang bereits mit der Antriebseinheit erläuterten Vorteile.

Weitere Merkmale und Vorteile der Erfindung sind Gegenstand der nachfolgenden zeichnerischen Darstellung sowie der Beschreibung eines Ausführungsbeispiels einer erfindungsgemäßen Windstopeinrichtung mit einer daran montierten Antriebseinheit.

In der Zeichnung zeigen:
- Fig. 1: eine schematische Seitenansicht eines Cabriofahrzeugs mit einer erfindungsgemäßen Windstopeinrichtung;
- Fig. 2: eine perspektivische Darstellung der Windstopeinrichtung gemäß Fig. 1 mit einer erfindungsgemäßen Antriebseinheit;
- Fig. 3: eine Seitenansicht der erfindungsgemäßen Windstopeinrichtung in einer inaktiven Stellung des Windschotts;
- Fig. 4: einen Schnitt längs Linie 4-4 mit teilweise durchgezogen gezeichnet dargestelltem Windschott in der inaktiven Stellung und gestrichelt teilweise dargestelltem Windschott in der aktiven Stellung und
- Fig. 5: eine perspektivische Darstellung des Windschotts gemäß Fig. 2 mit schematischer Zuordnung von Bedienungsmöglichkeiten zum Bedienen der erfindungsgemäßen Antriebseinheit.

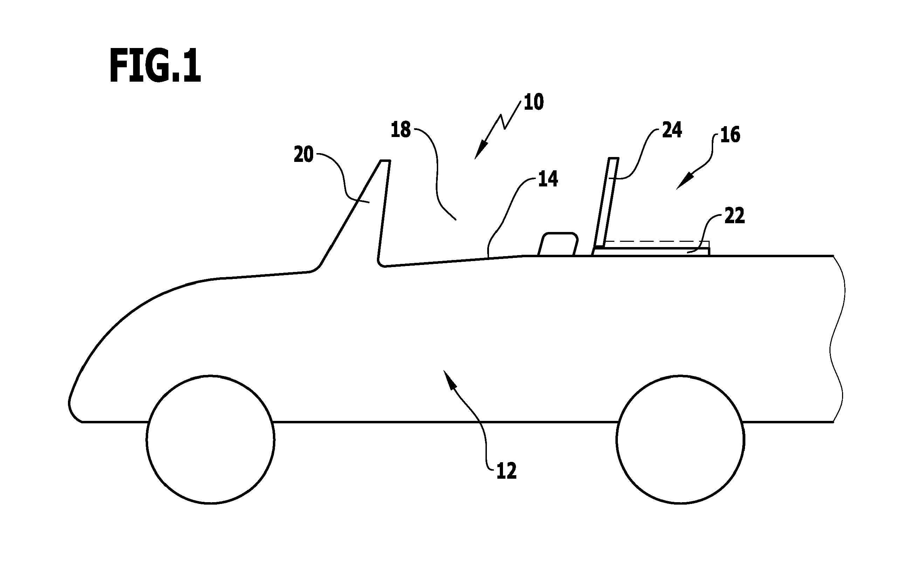

Ein in Fig. 1 dargestelltes, als Ganzes mit 10 bezeichnetes Cabriofahrzeug umfasst eine Karosserie 12 an welcher in Höhe einer Gürtellinie 14 eine als Ganzes mit 16 bezeichnete Windstopeinrichtung montierbar ist, und zwar hinter einem Fahrgastbereich 18, der seinerseits hinter einer Frontscheibe 20 der Karosserie 12 angeordnet ist.

Die Windstopeinrichtung 16 umfasst ein Basisteil 22, welches ungefähr in Höhe der Gürtellinie 14 an der Karosserie 12 fixierbar ist sowie ein Windschott 24, welches in seiner aktiven Stellung, dargestellt in Fig. 1, sich quer zur Gürtellinie 14 der Karosserie 12 erstreckt und dabei nach oben aufgerichtet ist und von der in Fig. 1 durchgezogen gezeichneten aktiven Stellung in eine inaktive Stellung, dargestellt in Fig. 1 in gestrichelten Linien, verschwenkbar ist.

Hierzu ist das Windschott 24 um eine Achse 25 verschwenkbar an einem dem Fahrgastbereich 18 zugewandten Vorteil 23 des Basisteils 22 gelagert.

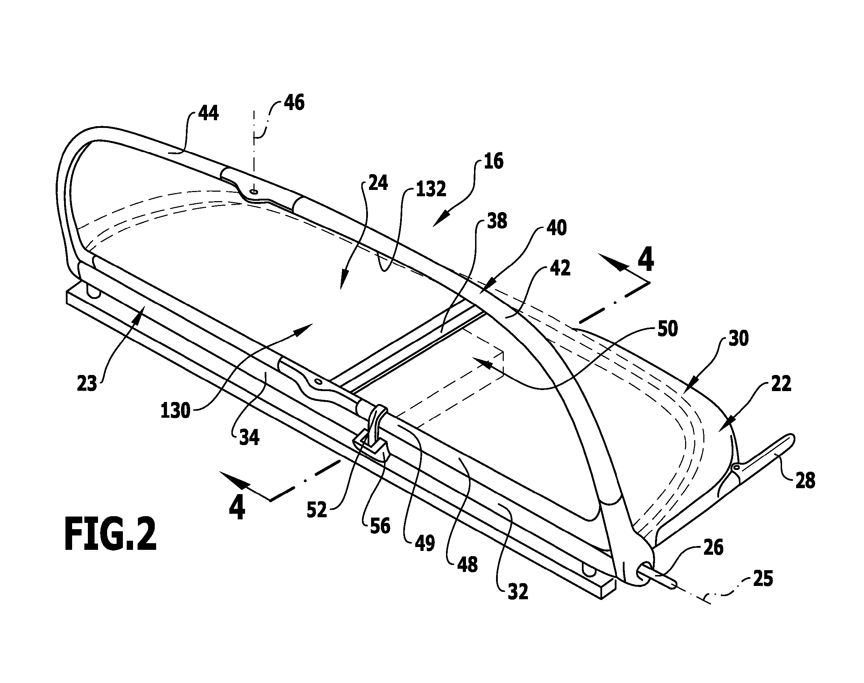

Eine derartige Windstopeinrichtung 16 ist, wie in Fig. 2 dargestellt, mit dem Basisteil 22 über Fixierelemente 26 und 28 an der Karosserie 12 montierbar und somit auch an dieser fixierbar.

Das Basisteil 22 ist beispielsweise als Abdeckung ausgebildet und umfasst einen als Ganzes mit 30 bezeichneten Abdeckrahmen, welcher beispielsweise aus zwei Abdeckrahmenteilen 32 und 34 gebildet ist, wobei die Abdeckrahmenteile 32 und 34 relativ zueinander klappbar und in einer in Fig. 2 dargestellten ausgebreiteten Stellung relativ zueinander fixierbar sind, so dass vordere Streben 36 derselben im Wesentlichen fluchtend miteinander ausgerichtet sind.

An dem Basisteil 22 ist das als Ganzes mit 24 bezeichnete Windschott gehalten, welches einen Windschottrahmen 40 aufweist, der ebenfalls aus zwei Windschottrahmenteilen 42 und 44 gebildet ist, die um eine Achse 46 relativ zueinander klappbar sind.

Auch die Windschottrahmenteile 42 und 44 sind in der in Fig. 2 dargestellten ausgebreiteten Stellung relativ zueinander fixierbar und bilden eine durchgehende untere Rahmenstrebe 48.

Um das Windschott 24 mit dem Windschottrahmen 40 von der in Fig. 2 durchgezogen gezeichneten aktiven Stellung in die in Fig.2 gestrichelt gezeichnete inaktive Stellung verschwenken zu können, ist an dem Basisteil 22, beispielsweise dem Abdeckrahmenteil 32, eine Antriebseinheit 50 gehalten, welche mit einem zugsteifen, jedoch in Richtung quer zu seiner Erstreckungsrichtung federelastisch biegbaren und daher nur begrenzt eigensteifen Verschiebeelement 52 auf den Windschottrahmen 40 einwirkt, beispielsweise dadurch, dass das Verschiebeelement 52, beispielsweise ein Band aus Federstahl, an der unteren Rahmenstrebe 48 angreift und zwar auf einer in der aktiven Stellung des Windschottrahmens 40 der Karosserie 12 abgewandten Oberseite 49 der unteren Rahmenstrebe 48.

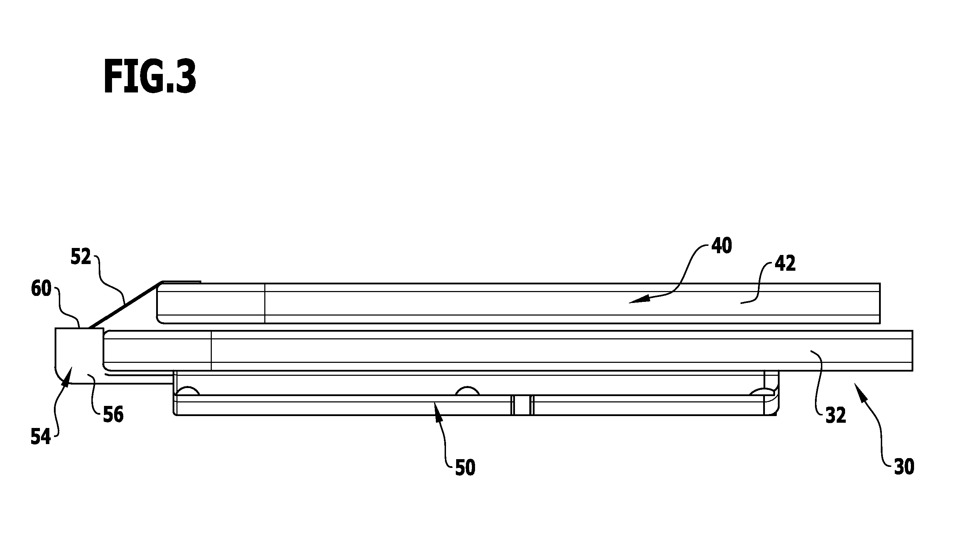

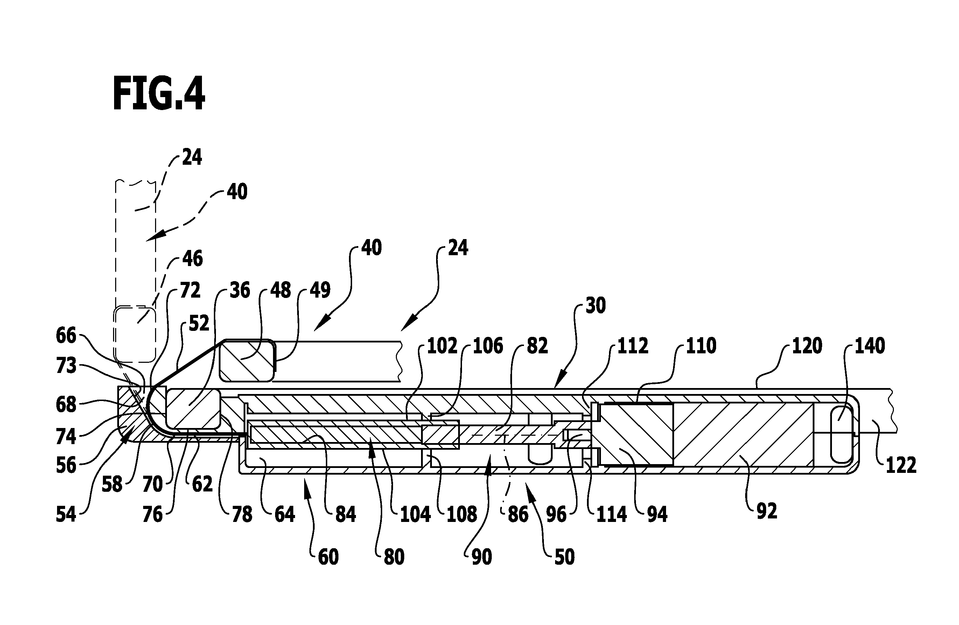

Die Antriebseinheit 50 umfasst, wie in Fig. 3 und 4 dargestellt, eine in einem Vorderbereich angeordnete Führung 54 für das Verschiebeelement 52, welche in einem Teil 56 eines Gehäuses 60 der Antriebseinheit 50 angeordnet ist, wobei die Führung 54 einen Führungskanal 62 aufweist, welcher auf einer der Karosserie 12 zugewandten Seite der vorderen Strebe 36 des Abdeckrahmens 30 und dann von der Karosserie 12 weggebogen nach oben in Richtung des Windschotts 24 verläuft, und zwar von einem Innenraum 64 des Gehäuses 60 bis zu einer auf einer der Karosserie 12 abgewandten Seite liegenden Austrittsöffnung 66, aus welcher das Verschiebeelement 52 austritt. Der Führungskanal 62 weist ausgehend von der Austrittsöffnung 66 einen trichterförmigen Bereich 68 auf, an welchen sich ein an eine Form des Verschiebeelements 52 angepasster und bis zum Innenraum 64 führender Bereich 70 anschließt.

In der Führung 54 erfolgt eine Umlenkung des Verschiebeelements 52 derart, dass dieses einen gekrümmt verlaufenden Abschnitt 58 aufweist und gleichzeitig eine Führung und Abstützung dieses gekrümmt verlaufenden Abschnitts 58 des Verschiebeelements 52 derart, dass dieses sowohl mit Zugkräften als auch mit Druckkräften auf das Windschott 24 zum Verschwenken desselben einwirken kann.

Auf einer der vorderen Strebe 36 des Abdeckrahmens 30 zugewandten Seite des trichterförmigen Bereichs 68 verläuft hierbei eine innere gewölbte Führungsfläche 72, an welcher das Verschiebeelement 52 dann anliegt, wenn der Windschottrahmen 40 in seiner inaktiven Stellung steht und von dieser durch auf das Verschiebeelement 52 wirkenden Zugkräfte in die aktive Stellung bewegt werden soll, wobei durch die Führungsfläche 72 insgesamt das Verschiebeelement 52 um einen Winkel von mehr als 90°, vorzugsweise um einen Winkel von mehr als 140° geführt ist.

Der inneren Führungsfläche 72 gegenüberliegend ist eine äußere Führungsfläche 73 angeordnet, die das Verschiebeelement 52 dann abstützt, wenn das Windschott 24 durch auf das Verschiebeelement 52 wirkende Schubkräfte von der aktiven Stellung in die inaktive Stellung bewegt werden soll.

Der die Führung 54 aufnehmende Teil 56 des Gehäuses 60 umgreift die vordere Strebe 36 des Abdeckrahmens 30 beispielsweise im Bereich ihrer Vorderseite 74, ihrer Unterseite 76 und ihrer Rückseite 78, so dass die Führung 54 hierdurch an der vorderen Strebe 36 formschlüssig fixierbar ist.

Das über den Führungskanal 62 in den Innenraum 64 des Gehäuses 60 eintretende Verschiebeelement 52 ist im Innenraum 64 des Gehäuses 60 mit einer als Ganzes mit 80 bezeichneten Verschiebeeinheit 80 einer in dem Gehäuse 60 angeordneten Verschiebeeinrichtung 90 verbunden, welche zusätzlich zur Verschiebeeinheit 80 einen Antriebsmotor 92 mit einem Getriebe 94 umfasst.

Das Getriebe 94 treibt mit seiner Abtriebswelle 96 die Verschiebeeinheit 80, welche ihrerseits eine von der Abtriebswelle 96 angetriebene Gewindespindel 82 sowie eine Spindelmutterhülse 84 umfasst, wobei die Gewindespindel 82 in die Spindelmutterhülse 84 einschraubbar ist, so dass die Spindelmutterhülse 84 längs einer Drehachse 86 der Gewindespindel 82 verschiebbar ist.

Das Verschiebeelement 52 ist auf einer der Gewindespindel 82 abgewandten Seite mit der Spindelmutterhülse 84 verbunden, so dass ein Verschieben der Spindelmutterhülse 84 von der Führung 54 weg zu einem Einziehen des Verschiebeelements 52 in den Innenraum 64 des Gehäuses 60 führt, wobei das Verschiebeelement 52 durch die Führung 54 hindurch gezogen wird und in diesem Falle in der Lage ist, den Windschottrahmen 40 von der in Fig. 4 durchgezogen gezeichneten inaktiven Stellung in die in Fig. 4 gestrichelt gezeichnete aktive Stellung aufzurichten.

Zur drehfesten, jedoch in Richtung der Drehachse 86 der Gewindespindel 82 verschiebbaren Führung der Spindelmutterhülse 84 ist diese beispielsweise mit einer unrunden Außenkontur, zum Beispiel mit einander gegenüberliegenden Flachseiten 102 und 104 versehen, die an einander gegenüberliegenden Stegen 106 und 108 des Gehäuses 60 anliegen und somit verhindern, dass sich die Spindelmutterhülse 84 mit der Gewindespindel 82 um die Drehachse 86 mitdreht.

Somit ist die Spindelmutterhülse 84 drehfest, jedoch in Richtung der Drehachse 86 verschiebbar gelagert.

Die beim Einschrauben der Gewindespindel 82 in die Spindelmutterhülse 84 und somit beim Ziehen des Verschiebeelements 52 in den Innenraum 64 des Gehäuses 60 auf die Gewindespindel 82 wirkenden Kräfte werden vorzugsweise von dieser über die Abtriebswelle auf das Getriebe 94 übertragen, welches mit einem Getriebegehäuse 110 an Stützstegen 112 und 114 des Gehäuses 60 gegen eine Bewegung in Richtung der Spindelmutterhülse 84 abgestützt ist und somit die beim Einziehen des Verschiebeelements 52 auf die Verschiebeeinheit 80 wirkenden Kräfte auf das Gehäuse 60 überträgt.

Wird die Gewindespindel 82 jedoch so gedreht, dass diese aus der Spindelmutterhülse 84 herausgeschraubt wird, so wandert die Spindelmutterhülse 84 in Richtung der Führung 54 und schiebt somit das Verschiebeelement 52 unter Abstützung desselben an der Führungsfläche 73 durch den Führungskanal 62 hindurch in Richtung der unteren Strebe 46 des Windschottrahmens 40, so dass der in Fig. 4 gestrichelt dargestellte aufgerichtete Windschottrahmen 40 an aufgrund der begrenzten Eigensteifigkeit des Verschiebeelements 52 und der Abstützung desselben an der Führungsfläche 73 der Führung 54 der Oberseite 49 der Rahmenstrebe 48 eine vom Verschiebeelement 52 ausgeübte Schubkraft in Richtung einer Bewegung in die inaktive Stellung erfährt, die diesem von der gestrichelt dargestellten aktiven Stellung wieder in Richtung der in Fig. 4 durchgezogen dargestellten inaktiven Stellung zu verschwenkt, so dass das Windschott 24 die inaktive Stellung wieder erreicht.

Das Gehäuse 60 der Antriebseinheit 50 liegt beispielsweise innerhalb des Abdeckrahmenteils 32 und ist nicht nur mittels der die Führung 54 aufnehmenden Teils 56 an der vorderen Strebe 36 des Abdeckrahmens 30 fixiert, sondern beispielsweise zusätzlich auch an einer Mittelstrebe 38 des Abdeckrahmenteils 32.

Ferner liegt das Gehäuse 60 vorzugsweise unterhalb eines Flachmaterials 120, welches die Abdeckrahmenteile 32 und 34 im Bereich einer Rahmenöffnung 122 verschließt, so dass das Gehäuse 60 durch das Flachmaterial 120 bei einer Draufsicht auf den Abdeckrahmen 30 von einer der Karosserie 12 abgewandten Seite abgedeckt ist.

Das Flachmaterial 120 ist vorzugsweise teilweise luftdurchlässig, in gleicher Weise wie ein Flachmaterial 130, welches eine Rahmenöffnung 132 des Windschottrahmens 40 verschließt.

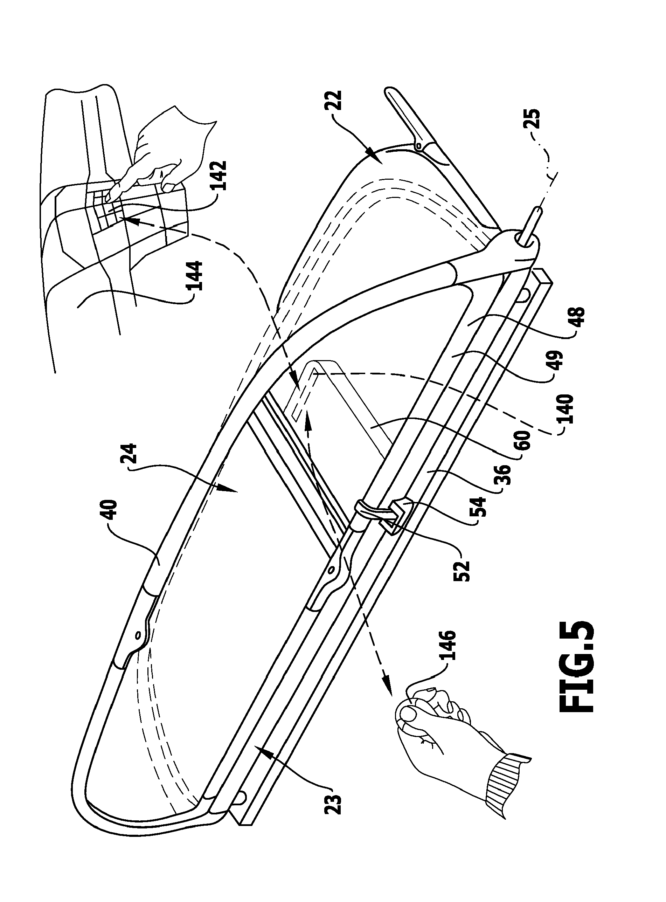

Die Ansteuerung des elektrischen Antriebsmotors 92 der Antriebseinheit 50 erfolgt vorzugsweise über eine in dem Gehäuse 60 integrierte Steuerschaltung 140, welche, wie in Fig. 5 dargestellt, beispielsweise entweder leitungsgebunden von Schaltelementen 142 an einem Armaturenbrett 144 der Karosserie 12 ansteuerbar ist oder drahtlos durch eine Bedienungseinheit 146, welche von einer Bedienungsperson mitgeführt und betätigt werden kann.

Die verschiedenen Arten der Ansteuerung der Antriebseinheit 50 sind dabei in der deutschen Patentanmeldung DE 10 2006 043 004 A beschrieben, auf welche in diesem Zusammenhang vollinhaltlich Bezug genommen wird.

Außerdem sind verschiedene Arten der Stromversorgung der Antriebseinheit 50 möglich die in der deutschen Patentanmeldungen DE 10 2006 043 626 A beschrieben sind, auf welche ebenfalls vollinhaltlich Bezug genommen wird.

## Patentansprüche

1. Antriebseinheit für eine Windstopeinrichtung (16) für Cabriofahrzeuge (10), umfassend ein an einer Karosserie (12) montierbares Basisteil (22) und ein relativ zum Basisteil (22) zwischen einer aktiven aufrechten Stellung und einer inaktiven nach hinten geklappten Stellung schwenkbares Windschott (24), wobei die Antriebseinheit (50) zum Verschwenken des Windschotts (24) zwischen der aktiven Stellung und der inaktiven Stellung dient,
**dadurch gekennzeichnet, dass** die Antriebseinheit (50) eine Verschiebeeinrichtung (90) und ein in seiner Erstreckungsrichtung zugsteifes und quer zur Erstreckungsrichtung bewegbares Verschiebeelement (52) umfasst, welches zum Verschwenken des Windschotts (24) zwischen der aktiven Stellung und der inaktiven Stellung die Verschiebeeinrichtung (90) mit dem Windschott (22) koppelt und dazu zumindest in einer Stellung des Windschotts (24) einen gekrümmt verlaufenden Abschnitt (58) aufweist.

2. Antriebseinheit nach Anspruch 1, **dadurch gekennzeichnet, dass** das Verschiebeelement (52) als quer zu seiner Erstreckungsrichtung federelastisch bewegbares Element ausgebildet ist.

3. Antriebseinheit nach einem der voranstehenden Ansprüche, **dadurch gekennzeichnet, dass** das Verschiebeelement (52) direkt mit dem Windschott (24) verbindbar ist.

4. Antriebseinheit nach einem der voranstehenden Ansprüche, **dadurch gekennzeichnet, dass** der gekrümmt verlaufende Abschnitt (58) des Verschiebeelements (52) mittels einer Führung (54) geführt ist.

5. Antriebseinheit nach Anspruch 4, **dadurch gekennzeichnet, dass** die Führung (54) einen gekrümmt verlaufenden Führungskanal (62) aufweist.

6. Antriebseinheit nach Anspruch 5, **dadurch gekennzeichnet, dass** der Führungskanal (62) variierende Krümmungen des in diesem geführten Abschnitts (58) des Verschiebeelements (52) zulässt.

7. Antriebseinheit nach einem der Ansprüche 5 oder 6, **dadurch gekennzeichnet, dass** der Führungskanal (62) auf mindestens einer Seite eine gekrümmte Führungsfläche (72) aufweist und dass insbesondere das Verschiebeelement (52) bei in einer Stellung stehendem Windschott (24) über eine größere Strecke an der gekrümmten Führungsfläche (72) anliegt als in der anderen Stellung des Windschotts (24).

8. Antriebseinheit nach einem der Ansprüche 5 bis 7, **dadurch gekennzeichnet, dass** die Führung (54) einen Führungskanal (62) mit einem das Verschiebeelement (52) querbewegungsfrei führenden Bereich (70) aufweist.

9. Antriebseinheit nach einem der voranstehenden Ansprüche, **dadurch gekennzeichnet, dass** die Verschiebeeinrichtung (90) eine drehend antreibbare Verschiebeeinheit (80) umfasst.

10. Antriebseinheit nach Anspruch 9, **dadurch gekennzeichnet, dass** die Verschiebeeinheit (80) linear auf das Verschiebelement (52) einwirkt.

11. Antriebseinheit nach einem der voranstehenden Ansprüche, **dadurch gekennzeichnet, dass** die Antriebseinheit (50) an dem Basisteil (22) montierbar ist, und insbesondere die Antriebseinheit (50) ein Gehäuse (60) aufweist, welches an dem Basisteil (22) montierbar ist.

12. Antriebseinheit nach Anspruch 11, **dadurch gekennzeichnet, dass** das Gehäuse (60) mit einem die Führung (54) aufnehmenden Teil (56) an dem Basisteil (22) montierbar ist.

13. Antriebseinheit nach Anspruch 11 oder 12, **dadurch gekennzeichnet, dass** die Antriebseinheit (50) an einer Unterseite des Basisteils (22) montierbar ist.

14. Antriebseinheit nach Anspruch 13, **dadurch gekennzeichnet, dass** das Gehäuse (60) an der vordere Strebe (36) des Basisteils (22) von unten montierbar ist.

15. Windstopeinrichtung (16) für Cabriofahrzeuge (10), umfassend ein an einer Karosserie (12) montierbares Basisteil (22), ein relativ zum Basisteil (22) zwischen einer aktiven aufrechten Stellung und einer inaktiven nach hinten geklappten Stellung verschwenkbares Windschott (24) sowie eine Antriebseinheit (50) zum Verschwenken des Windschotts (24) zwischen der aktiven Stellung und der inaktiven Stellung, **dadurch gekennzeichnet, dass** die Antriebseinheit (50) nach einem der voranstehenden Ansprüche ausgebildet ist.
